# EUROPÄISCHE PATENTSCHRIFT

(11) **EP 2 053 485 B1**
(45) Veröffentlichungstag und Bekanntmachung des Hinweises auf die Patenterteilung: **06.09.2017**
(21) Anmeldenummer: 08105647.5
(22) Anmeldetag: 24.10.2008
(51) Int. Cl.: B29C 45/00, B29C 45/16, G05G 1/50

(54) **Bedienelement**
Operating element
Elément de commande

(30) Priorität: 25.10.2007 DE 102007051380
(43) Veröffentlichungstag der Anmeldung: 29.04.2009
(73) Patentinhaber: Continental Automotive GmbH, 30165 Hannover (DE)
(72) Erfinder: Bolte, Peter, 35418 Buseck (DE); Fiegler, Till, 35510 Butzbach / Maibach (DE); Strobel, Henry, 65843 Sulzbach (DE)

(56) Entgegenhaltungen:
- EP-A1- 1 465 001
- DE-B3-102006 011 641
- DE-U1-202004 020 339
- US-A- 5 688 461
- US-A1- 2004 107 545

## Beschreibung

Die Erfindung bezieht sich auf ein Bedienelement mit mindestens einer ersten Komponente und einer zweiten Komponente, die als Spritzgussteile hergestellt und miteinander verbunden sind und nebeneinander liegende und aneinander angrenzende Oberflächen aufweisen.

Bei derartigen Bedienelementen ist es bekannt die erste und die zweite Komponente separat herzustellen und danach die beiden Komponenten z.B. mittels Rastverbindung miteinander zu verbinden.

Diese Ausbildung erfordert einen Herstellungsaufwand für die Komponenten und einen großen Montageaufwand für den Zusammenbau der Komponenten.

Darüber hinaus ist aus der DE 20 2004 020 339 U1 ein Kraftfahrzeugpedal bekannt, das in einem 2K-Spritzgießverfahren hergestellt wird. Ein erstes thermoplastisches Elastomer eines ersten Formkörpers kann metallisch eingefärbt sein, während das zweite thermoplastische Elastomer eines zweiten Formkörpers eine dunkle, gummiartige Einfärbung aufweisen kann und den ersten Formkörper teilweise überdeckt.

Aus der US 2004/0107545 A1 ist ein Knopf bekannt, bei dem ein Grundkörper teilweise mit einem zweiten Material umspritzt wird.

Aus der US 5,688,461 A ist ein Kunststoffelement bekannt, bei dem ein Grundkörper mit einem weichen, elastischen Kunststoffmaterial umspritzt wird.

Aufgabe der Erfindung ist es daher, ein Bedienelement der eingangs genannten Art zu schaffen, das mit geringem Aufwand herstellbar ist.

Diese Aufgabe wird erfindungsgemäß gelöst mit den Merkmalen des Anspruchs 1.

Trotz des Oberflächenbeschichtungsvorgangs wird eine einfache Herstellbarkeit erreicht, wobei gleichzeitig ein unsauberer Trennungsbereich zwischen der Oberflächenbeschichtung der ersten Komponente und der zweiten Komponente vermieden wird, da die Oberflächenbeschichtung unter die zweite Komponente reicht.

Weist der von der zweiten Komponente überdeckte Bereich der ersten Komponente von der Oberflächenbeschichtung ausgesparte Freilassungsbereiche auf, so führt dies zu einer guten Verbindung zwischen der ersten und der zweiten Komponente.

Ebenfalls zu einer Verbesserung der Anordnung der zweiten Komponente an der ersten Komponente dient es, wenn die erste Komponente an ihrer Oberfläche eine Vertiefung aufweist, in der die zweite Komponente angeordnet ist.

Dabei grenzen die nicht von der zweiten Komponente überdeckte Oberfläche der ersten Komponente und die Oberfläche der zweiten Komponente in einer Ebene aneinander an, so dass sich ein einheitliches Bauteil mit unterschiedlichen Oberflächen ergibt.

Besteht die erste Komponente aus einem starren Kunststoff, so wird damit eine Formstabilität des Bedienungselements erreicht.

Die zweite Komponente kann aus einem starren Kunststoff oder einem elastischen Kunststoff bestehen.

Besteht die zweite Komponente aus einem elastischen Kunststoff, so sorgt die erste Komponente für die Formstabilität des Bedienelements, während die zweite Komponente gut und sicher erfassbar ist und für eine sichere Bedienbarkeit sorgt.

Der starre Kunststoff kann ein ABS (Acrylnitrid-, Butadien-, Styrol-Copolymer) oder ABS/PC (Acrylnitrid-, Butadien-, Styrol/Polycarbonat) oder PA (Polyamid) und der elastische Kunststoff ein TPE oder TPU (thermoplastische Elastomere) oder EPDM (Ethylen-Propylen-Dien-Kautschuk) oder SEBS (Styrol/Ethenbuten/Styrol-Block-Copolymerisat) sein.

Die Oberflächenbeschichtung kann eine galvanisierte Metallbeschichtung sein und insbesondere aus Chrom bestehen.

Es ist aber auch möglich, dass die Oberflächenbeschichtung eine Farbbeschichtung z.B. aus einem Lack oder eine PVD-Beschichtung (Physical Vapour Deposition) oder eine CVD-Beschichtung (Chemical Vapour Deposition) ist.

In einer bevorzugten, insbesondere in einem Kraftfahrzeug anwendbaren Ausbildung ist das Bedienelement ein Stellknopf eines Drehstellers, der einen die erste Komponente bildenden zylindrischen Zierring und ein die zweite Komponente bildendes ringförmigen Betätigungsteil aufweist, das insbesondere annähernd gleichen Außendurchmesser aufweist wie der Zierring, wobei das ringförmige Betätigungsteil in einer in der radial umlaufenden Mantelfläche des Zierrings ausgebildeten Ringnut angeordnet ist.

Dabei kann der Stellknopf um die Längsachse von Zierring und Betätigungsteil drehbar gelagert sowie der Zierring mehrteilig ausgebildet sein.

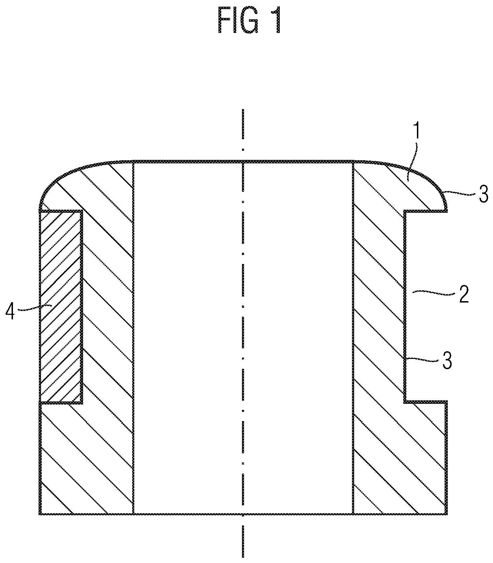

Ein Ausführungsbeispiel der Erfindung ist in der Zeichnung dargestellt und wird im Folgenden näher beschrieben. Es zeigen
- Figur 1: einen Stellknopf im Querschnitt, wobei die linke Hälfte ein Betätigungsteil und die rechte Hälfte kein Betätigungsteil aufweist

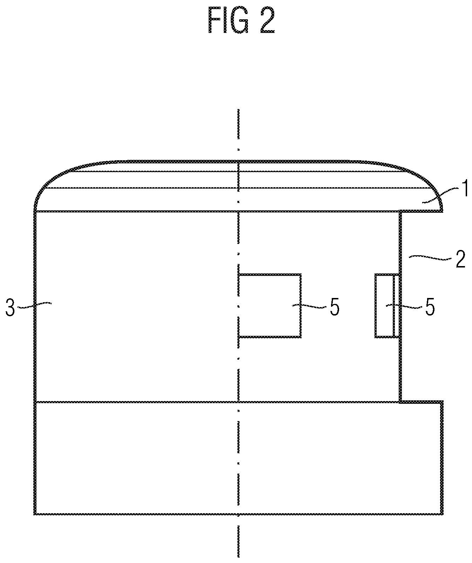

- Figur 2: einen Stellknopf im Querschnitt, wobei die linke Hälfte ein Betätigungsteil und die rechte Hälfte kein Betätigungsteil aufweist.

Der dargestellte Stellknopf eines Drehstellers für Kraftfahrzeuge weist einen Zierring 1 auf, der an seiner radial umlaufenden Mantelfläche eine Ringnut 2 aufweist.

Der Zierring 1 ist in einem Spritzgussverfahren aus einem starr aushärtenden Kunststoff erzeugt. Nach dem Spritzvorgang erhält der Zierring 1 durch Galvanisieren eine Oberflächenbeschichtung 3, die mit Ausnahme von Freilassungsbereichen 5 auch die Ringnut 2 überdeckt.

Anschließend wird in einem weiteren bei dem Spritzgussverfahren in die Ringnut 2 ein Kunststoff eingespritzt ist, der ein ringförmiges Bestätigungsteil 4 bildet, das nach Aushärten des Kunststoffs elastisch ist.

Die Außendurchmesser des Zierrings 1 und des Betätigungsteils 4 sind gleich.

## Patentansprüche

1. Bedienelement mit mindestens einer ersten Komponente und einer zweiten Komponente, die als Spritzgussteile hergestellt und miteinander verbunden sind und nebeneinander liegende und aneinander angrenzende Oberflächen aufweisen, wobei die erste Komponente nach ihrer Herstellung in einem ersten Spritzgießvorgang mit einer Oberflächenbeschichtung (3) versehen und die zweite Komponente die Oberflächenbeschichtung (3) der ersten Komponente teilweise überdeckend in einem zweiten Spritzgießvorgang auf die Oberfläche der ersten Komponente aufgebracht ist, wobei ein unsauberer Trennungsbereich zwischen der Oberflächenbeschichtung (3) der ersten Komponente und der zweiten Komponente vermieden wird, da die Oberflächenbeschichtung (3) unter die zweite Komponente reicht, und dass die nicht von der zweiten Komponente überdeckte Oberfläche der ersten Komponente und die Oberfläche der zweiten Komponente in einer Ebene aneinander angrenzen.

2. Bedienelement nach Anspruch 1, **dadurch gekennzeichnet, dass** der von der zweiten Komponente überdeckte Bereich der ersten Komponente von der Oberflächenbeschichtung (3) ausgesparte Freilassungsbereiche (5) aufweist.

3. Bedienelement nach einem der vorhergehenden Ansprüche, **dadurch gekennzeichnet, dass** die erste Komponente an ihrer Oberfläche eine Vertiefung aufweist, in der die zweite Komponente angeordnet ist.

4. Bedienelement nach einem der vorhergehenden Ansprüche, **dadurch gekennzeichnet, dass** die erste Komponente aus einem starren Kunststoff besteht.

5. Bedienelement nach einem der vorhergehenden Ansprüche, **dadurch gekennzeichnet, dass** die zweite Komponente aus einem starren Kunststoff oder einem elastischen Kunststoff besteht.

6. Bedienelement nach einem der Ansprüche 4 und 5, **dadurch gekennzeichnet, dass** der starre Kunststoff ein ABS (Acrylnitrid-, Butadien-, Styrol-Copolymer) oder ABS/PC (Acrylnitrid-, Butadien-, Styrol/Polycarbonat) oder PA (Polyamid) ist.

7. Bedienelement nach Anspruch 5, **dadurch gekennzeichnet, dass** der elastische Kunststoff ein TPE oder TPU (thermoplastische Elastomere) oder EPDM (Ethylen-Propylen-Dien-Kautschuk) oder SEBS (Styrol/Ethenbuten/Styrol-Block-Copolymerisat) ist.

8. Bedienelement nach einem der vorhergehenden Ansprüche, **dadurch gekennzeichnet, dass** die Oberflächenbeschichtung (3) eine galvanisierte Metallbeschichtung ist.

9. Bedienelement nach Anspruch 8, **dadurch gekennzeichnet, dass** die Metallbeschichtung aus Chrom besteht.

10. Bedienelement nach einem der Ansprüche 1 bis 7, **dadurch gekennzeichnet, dass** die Oberflächenbeschichtung eine Farbbeschichtung oder eine PVD-Beschichtung oder eine CVD-Beschichtung ist.

11. Bedienelement nach einem der vorhergehenden Ansprüche, **dadurch gekennzeichnet, dass** das Bedienelement ein Stellknopf eines Drehstellers ist, der einen die erste Komponente bildenden zylindrischen Zierring (2) und ein die zweite Komponente bildendes ringförmigen Betätigungsteil (4) aufweist, das insbesondere annähernd gleichen Außendurchmesser aufweist wie der Zierring (2), wobei das ringförmige Betätigungsteil (4) in einer in der radial umlaufenden Mantelfläche des Zierrings (2) ausgebildeten Ringnut (2) angeordnet ist.

12. Bedienelement nach Anspruch 11, **dadurch gekennzeichnet, dass** der Stellknopf um die Längsachse von Zierring (2) und Betätigungsteil (4) drehbar gelagert ist.

13. Bedienelement nach einem der Ansprüche 11 und 12, **dadurch gekennzeichnet, dass** der Zierring mehrteilig ausgebildet ist.

## Claims

1. Operating element comprising at least a first component and a second component, which are produced as injection-moulded parts and are connected to one another and have surfaces lying next to one another and adjacent to one another, wherein the first component is provided with a surface coating (3) after it has been produced in an injection-moulding operation and the second component is applied to the surface of the first component, partially covering the surface coating (3) of the first component, in a second injection-moulding operation, avoiding an untidy separating region between the surface coating (3) of the first component and the second component because the surface coating (3) reaches under the second component, and wherein the surface of the first component that is not covered by the second component and the surface of the second component are adjacent to one another in one plane.

2. Operating element according to Claim 1, **characterized in that** the region of the first component that is covered by the second component has clearance regions (5) cut out from the surface coating (3).

3. Operating element according to one of the preceding claims, **characterized in that** the first component has on its surface a depression in which the second component is arranged.

4. Operating element according to one of the preceding claims, **characterized in that** the first component consists of a rigid plastic.

5. Operating element according to one of the preceding claims, **characterized in that** the second component consists of a rigid plastic or a flexible plastic.

6. Operating element according to either of Claims 4 and 5, **characterized in that** the rigid plastic is an ABS (acrylonitrile-butadiene-styrene copolymer) or ABS/PC (acrylonitrile-butadiene-styrene/polycarbonate) or PA (polyamide).

7. Operating element according to Claim 5, **characterized in that** the flexible plastic is a TPE or TPU (thermoplastic elastomers) or EPDM (ethylene-propylene-diene rubber) or SEBS (styrene/ethylene-butylene/styrene block copolymer).

8. Operating element according to one of the preceding claims, **characterized in that** the surface coating (3) is an electrodeposited metal coating.

9. Operating element according to Claim 8, **characterized in that** the metal coating consists of chromium.

10. Operating element according to one of Claims 1 to 7, **characterized in that** the surface coating is a colour coating or a PVD coating or a CVD coating.

11. Operating element according to one of the preceding claims, **characterized in that** the operating element is an adjusting knob of a rotary adjuster, which has a cylindrical bezel (2) forming the first component and an annular actuating part (4) forming the second component, which has in particular almost the same outside diameter as the bezel (2), wherein the annular actuating part (4) is arranged in an annular groove (2) formed in the radially running-around lateral surface of the bezel (2).

12. Operating element according to Claim 11, **characterized in that** the adjusting knob is mounted rotatably about the longitudinal axis of the bezel (2) and the actuating part (4).

13. Operating element according to either of Claims 11 and 12, **characterized in that** the bezel is of a multipart form.

## Revendications

1. Elément de commande avec au moins un premier composant et un deuxième composant, qui sont des pièces fabriquées par moulage par injection et qui sont reliées l'une à l'autre et présentent des surfaces situées l'une à côté de l'autre et adjacentes l'une à l'autre, dans lequel le premier composant est muni après sa fabrication dans une première opération de moulage par injection d'un revêtement de surface (3) et le deuxième composant est déposé dans une deuxième opération de moulage par injection sur la surface du premier composant en recouvrant au moins partiellement le revêtement de surface (3) du premier composant, dans lequel une zone de séparation souillée entre le revêtement de surface (3) du premier composant et le deuxième composant est évitée, parce que le revêtement de surface (3) pénètre en dessous du deuxième composant, et en ce que la surface du premier composant non recouverte par le deuxième composant et la surface du deuxième composant sont adjacentes l'une à l'autre dans un plan.

2. Elément de commande selon la revendication 1, **caractérisé en ce que** la région du premier composant recouverte par le deuxième composant présente des zones libres (5) évidées du revêtement de surface (3).

3. Elément de commande selon l'une quelconque des revendications précédentes, **caractérisé en ce que** le premier composant présente sur sa surface un creux, dans lequel le deuxième composant est disposé.

4. Elément de commande selon l'une quelconque des revendications précédentes, **caractérisé en ce que** le premier composant est constitué d'une matière plastique rigide.

5. Elément de commande selon l'une quelconque des revendications précédentes, **caractérisé en ce que** le deuxième composant est constitué d'une matière plastique rigide ou d'une matière plastique élastique.

6. Elément de commande selon une des revendications 4 ou 5, **caractérisé en ce que** la matière plastique rigide est un ABS (copolymère acrylonitrile-butadiène-styrène) ou un ABS/PC (acrylonitrile-butadiène-styrène/- polycarbonate) ou un PA (polyamide).

7. Elément de commande selon la revendication 5, **caractérisé en ce que** la matière plastique élastique est un TPE ou TPU (élastomères thermoplastiques) ou un EPDM (caoutchouc éthylène-propylène-diène) ou un SEBS (copolymérisat bloc styrène/éthène butène/styrène).

8. Elément de commande selon l'une quelconque des revendications précédentes, **caractérisé en ce que** le revêtement de surface (3) est un revêtement métallique galvanisé.

9. Elément de commande selon la revendication 8, **caractérisé en ce que** le revêtement métallique est constitué de chrome.

10. Elément de commande selon l'une quelconque des revendications 1 à 7, **caractérisé en ce que** le revêtement métallique est un revêtement coloré ou un revêtement PVD ou un revêtement CVD.

11. Elément de commande selon l'une quelconque des revendications précédentes, **caractérisé en ce que** l'élément de commande est un bouton de réglage d'un actionneur rotatif, qui présente un anneau décoratif cylindrique (2) formant le premier composant et une partie d'actionnement annulaire (4) formant le deuxième composant, qui présente en particulier sensiblement le même diamètre extérieur que l'anneau décoratif (2), dans lequel la partie d'actionnement annulaire (4) est disposée dans une rainure annulaire (2) formée dans la surface latérale radialement périphérique de l'anneau décoratif (2).

12. Elément de commande selon la revendication 11, **caractérisé en ce que** le bouton de réglage est monté de façon rotative autour de l'axe longitudinal de l'anneau décoratif (2) et de la partie d'actionnement (4).

13. Elément de commande selon une des revendications 11 et 12, **caractérisé en ce que** l'anneau décoratif est réalisé en plusieurs parties.
